(19) Europäisches Patentamt

European Patent Office

Office européen des brevets

(11) **EP 2 088 708 A1**

## (12) EUROPEAN PATENT APPLICATION

(43) Date of publication:
**12.08.2009 Bulletin 2009/33**

(51) Int Cl.:
***H04L 1/00*** *(2006.01)*

(21) Application number: **08300076.0**

(22) Date of filing: **08.02.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92100 Boulogne-Billancourt (FR)**

(72) Inventors:
• **Champel, Mary-Luc
  35220 Marpiré (FR)**
• **Lemonnier, Philippe
  35850 Geveze (FR)**

(74) Representative: **Ruellan-Lemonnier, Brigitte
Thomson multimedia
Patent Department
46 Quai A. Le Gallo
92648 Boulogne Cedex (FR)**

(54)    **Method for transmitting data packets with forward error correction**

(57)    The present invention concerns a method for transmission of data packets between an error correction encoder and an error correction decoder.

The method comprises, at an encoder (1), the steps of indicating a matrix size and a filling period, filling in a matrix in an ordered manner, with a number of data packets received during the period, the number of data packets being inferior to the number of fields of the matrix, forming an error correction packet per row and/or per column of the matrix, where fields of the matrix not filled with data packets are ignored, and sending the matrix and the error correction packets.

FIG. 2

**Description**

FIELD OF THE INVENTION

The present invention relates generally to error control mechanisms and in particular to a forward error correction mechanism and system for the transport of data packets in a variable bit rate.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The Society of Motion Picture and Television Engineers (SMPTE) has defined a set of standards for the transport of data over IP networks, noted hereinafter SMPTE 2022. SMPTE 2022-1 standard specifies the "Forward Error Correction for Real-time Video/Audio Transport Over IP Networks". SMPTE 2022-2 standard specifies the "Unidirectional transport of constant bit rate MPEG-2 Transport Streams on IP Networks". SMPTE 2022 standards defines a forward error correction (FEC) scheme for transport of constant bit rate MPEG-2 transport streams, CBR MPEG-2 TS, over the Internet Protocol IP. It defines a protocol at the FEC encoder and at the FEC decoder. SMPTE 2022 uses a fixed protection period size. In a CBR, a fixed size directly corresponds to a fixed time. The latency induced by the FEC process is predictable. It is given by the following formula:

$$\text{Latency} = \text{Protection Period Size} / \text{Service Bitrate}$$

In a variable bit rate, VBR transport, the Service Bitrate is not constant. It is comprised between the maximum and the minimum service bitrate. The latency can only be estimated as follows:

$$\text{Minimum Latency} = \text{Protection Period Size} / \text{Maximum Service Bitrate}$$

$$\text{Maximum Latency} = \text{Protection Period Size} / \text{Minimum Service Bitrate}$$

Only the maximum latency is meaningful at the receiver's side. It permits to provide an estimation of the maximum required reception buffer length in time.
When the Minimum Service Bitrate stays relatively high, using the same kind of FEC scheme for VBR as for CBR is possible since the Maximum Latency actually remains low enough.
When the Minimum Service Bitrate gets too low, the maximum latency may be too high for the receiver buffer length. This is then not possible to support the FEC service. For instance, protecting Picture-In-Picture PIP streams in IPTV may not be possible since their bitrate is usually at the level of a few KBit/s. That would require either a large FEC overhead by using a quite small protection period size or a large FEC latency by using a usual protection period size such as fifty packets.
In another words, using a FEC with a fixed protection period size may be sufficient for some video services over IP. However, it cannot offer protection for a decent price since the only remaining solution would be to use a small protection period that leads to a very large FEC overhead/price.

SUMMARY OF THE INVENTION

The present invention attempts to remedy at least some of the concerns connected with the prior art, by providing an error correction method over a variable bit rate transport.
The invention concerns also a method, at a decoder, for receiving data packets, comprising the steps of receiving a matrix size, a filling period and a maximum data rate, receiving data packets and error correction packets, wherein each of the error correction packet correspond to each row and each column of the matrix, the matrix being filled in an ordered manner with the data packets, the number of data packets being inferior to the number of fields of the matrix, and the matrix comprising at least one field not filled with a data packet, and decoding the error correction packets.

According to an embodiment, the method comprises the steps of receiving an indication of the number of NULL packets and inserting the NULL packets inside the matrix, prior to decoding the error correction packets.

The present invention concerns a method, at an encoder, for indicating data packets to a decoder, comprising the steps of transmitting a matrix size and a filling period, filling in a matrix in an ordered manner, with a number of data packets received during the period, the number of data packets being inferior to the number of fields of the matrix, forming an error correction packet per row and/or per column of the matrix, where fields of the matrix not filled with data packets are ignored, and sending the matrix and the error correction packets.

The invention concerns also a method, at an encoder, for indicating data packets to a decoder, comprising the steps of transmitting a matrix size and a filling period, filling in a matrix in an ordered manner, with a number of data packets received during the period, the number of data packets being inferior to the number of fields of the matrix, and the matrix comprising at least one field not filled with a data packet, forming an error correction packet per row and/or per column of the matrix, where the at least not filled field is filled with NULL packets, and sending the matrix and the error correction packets.

According to an embodiment, the NULL packets are transmitted as data packets or the number of NULL packets is indicated to the decoder.

According to an embodiment, the number of NULL packets is indicated in each of the error correction packet.

According to an embodiment, data packets comprise a sequence number, and the sequence number is incremented for each field of the matrix.

According to an embodiment, data packets comprise a sequence number, and the sequence number is not incremented for the at least non filled field.

According to an embodiment, the NULL packet is a data packet with payload fields set to zero.

According to an embodiment, the NULL packet comprises some header fields set to zero.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

BRIEF DESCRIPTION OF THE DRAWINGS

The invention will be better understood and illustrated by means of the following embodiment and execution examples, in no way limitative, with reference to the appended figures on which:

- Figure 1 represents a system according to the embodiments;
- Figure 2 represents a FEC matrix according to the embodiments;
- Figure 3 illustrates the transmission of a matrix according to the embodiments; and
- Figure 4 illustrates another transmission of a matrix according to the embodiments.

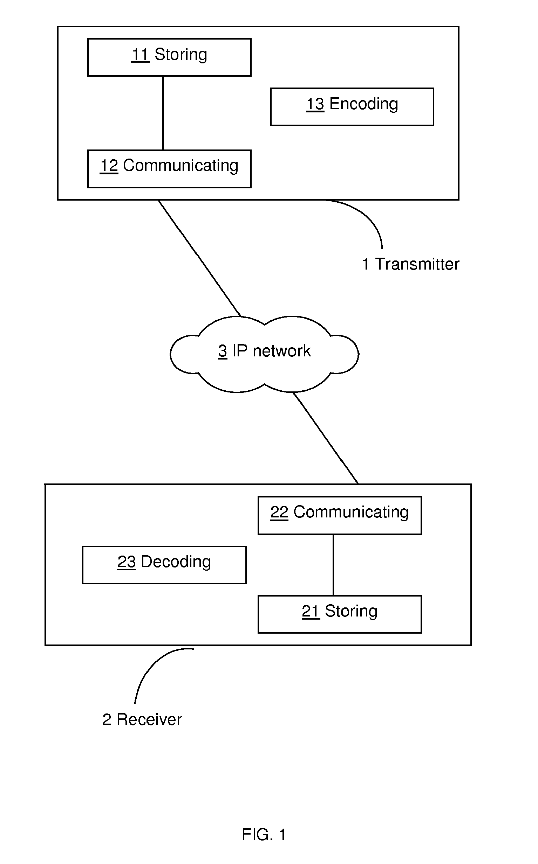

In Figure 1, the represented blocks are purely functional entities, which do not necessarily correspond to physically separate entities. Namely, they could be developed in the form of hardware or software, or be implemented in one or several integrated circuits.

DETAILED DESCRIPTION OF PREFERRED EMBODIMENTS

The exemplary embodiment of the invention comes within the framework of the transfer of digital data in real time over an IP type network. The data are transmitted, in this exemplary embodiment, in the form of a stream via the Real Time Protocol (RTP). Of course the invention is not limited to this particular environment and may be applied within other frameworks where digital data are transferred on a network at a variable bit rate.

The system according to the embodiment is represented in figure 1. It comprises a transmitter 1 and a receiver 2. The transmitter comprises a communication interface 12 to connect and send data to the IP network 3. It comprises an encoding module 13 for encoding the FEC. The encoding module forms a matrix with data packets it receives, in order to calculate an error correction value per row and per column, in a manner described hereinafter. The transmitter comprises a storing module 11 to buffer the data and the FEC packets before they are transmitted.

The receiver comprises a communication interface 22 for connecting to the IP network. The receiver comprises a decoding module 23 to decode the FEC packets comprised in the received matrix. It also comprises a storing module 21 to buffer the received packets.

Of course the system according to the embodiment might comprise more than one receiver.

The method of the embodiment is now described. The transmitter sends a video service to the receiver over the IP network. The transmitter comprises an encoding module, which encodes FEC data corresponding to the video data in a manner close to SMPTE 2022. As the data is transmitted at variable bit rate to the receiver, FEC encoding is different from SMPTE 2022. The difference is further described hereinafter.

A latency value is chosen at the FEC encoder. It is transmitted to the receiver. The encoder also sends the maximum bitrate of the video service. These parameters are transmitted in the RTP packet extension header. They may also be transmitted to the decoder with any other type of packet, in any manner well known per se. The receiver buffers all data packets that are received in a time window that is no longer than the latency value announced by the FEC encoder. The maximum bitrate of the video service enables the receiver to compute the maximum buffer size as follows:

$$\text{Maximum buffer size} = \text{latency} \times \text{maximum bitrate}$$

Maximum FEC latency and maximum bitrate of video service are enough for the receiver to know the longest time it will have to buffer data before the FEC can be decoded. The receiver then knows the maximum buffer size required to do so.

At the encoder, a FEC matrix is created, according to the SMPTE 2022. The encoder fills in a matrix with data packets, and encodes the FEC of each row and column of the matrix. In SMPTE 2022, the matrix is sent when it is full. The embodiment is different from SMPTE 2022 in that when the latency value is reached, the matrix is sent to the receiver, even if the matrix is not full of data packets. Sending a non full FEC matrix may decrease the FEC efficiency. But the receiver is ensured that it only has to buffer content during a time equal to the latency value transmitted by the FEC encoder.

In a first embodiment, for each incomplete row and column, the corresponding FEC packets are computed over existing data packets. Incomplete rows and columns are rows or columns for which the required number of data packets have not been received.

At the receiver, the missing packets are considered as lost packets. The FEC decoding can be done as usual with SMPTE 2022 at a cost of a decreased efficiency. Missing packets are considered lost although they never really existed.

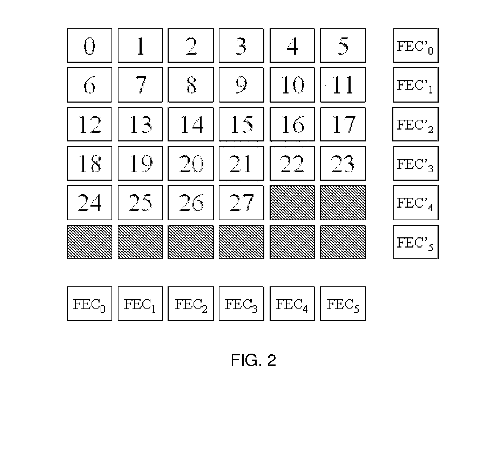

An example of such transmission is illustrated in figure 2. The FEC encoder is set on a two dimension matrix comprising 6 rows and 6 columns. The encoder sets the latency value to 200ms, which is a value that conforms to the SMPTE 2022. At the end of the latency period, the encoder has only received 28 data packets although 36 are needed to fill in the matrix. The matrix is filled with the 28 data packets in an ordered manner. In the example the matrix is filled starting from the first row to the last row. Of course it could be filled in any other manner that would be agreed with the decoder. The FEC values are calculated for each row and each column. The encoder sends those 28 packets and the 12 related FEC packets. The data packets are the packets 0 to 27. The FEC packets corresponding to the columns are $FEC_0$ to $FEC_5$; the FEC packets corresponding to the rows are $FEC'_0$ to $FEC'_5$.

In the example, the last row of the matrix does not comprise any data packets. $FEC'_5$ is then useless. For bandwidth optimization, it is not necessary to encode the $FEC'_5$ at the encoder and to transmit $FEC'_5$ to the receiver.

In a second embodiment, some packets, called hereinafter NIL packets, are inserted in the original stream. These packets are taken into account in the FEC encoding process. These NIL packets are also transmitted to the FEC decoder. The method according to the second embodiment limits the loss of FEC efficiency.

The NIL packets inserted at the FEC encoder do not generate any interruption in the RTP sequence number. This permits the FEC stream and data stream to be successfully decoded by a SMPTE 2022 FEC compliant decoder.

If the stream received at the FEC encoder is an RTP stream, the FEC encoder creates a new RTP sequence in order to insert the NIL packets. With such a mechanism in place, the FEC encoder actually deals with a regular RTP stream protected by a regular SMPTE 2022 FEC.

In order to simplify the FEC computation, the basic RTP header information that contains the Payload Type, the timestamp and the SSRS is set to 0. Additionally, the payload of the NIL packets is also set to zero. The timestamp of NIL packets is not important since NIL packets are only intended to permit FEC decoding.

Alternatively, the NIL packets don't contain any payload. This reduces the NIL packet size. Such an IP packet size is 40 bytes long. For comparison, a NIL packet with zeroes in the payload in a stream where 7 Transport Stream packets are present per RTP packet would be 1356 bytes long. The NIL packets are anyway stuffed with zeroes in the FEC process.

The second embodiment results in a low overhead. The decoder is compatible with a SMPTE 2022 decoder. Only the FEC encoder needs to be modified in order to take into account the maximum latency and trigger the sending of an incomplete matrix and the new NIL packets.

In a third embodiment, the NIL packets are not sent to the receiver. This permits to reduce the overhead of the previous embodiment. The encoder sends a piece of information to indicate to the decoder of the existence of the NIL packets. The decoder only needs to know how many NIL packets were generated during the FEC coding process. A first solution for sending this information to the receiver is to use the extension field of the FEC header in a SMPTE 2022 FEC packet. It is one byte long and permits to indicate a maximum of 255 NIL packets to the receiver.

If the indication of more than 255 NIL packets is required, the Mask field of the FEC header is used. It is 24-bit long, and it permits to signal up to 2^24 NIL packets. This is sufficient since the maximum size of the matrix is 2^16 packets.

By providing the number of NIL packets in each of the FEC packets, it makes sure that even if all FEC packets but one are actually lost during the communication, the receiver still receives that information. It is only when no FEC packets are received that the receiver cannot know the number of NIL packets but in such a case since no FEC information is received, FEC decoding cannot be provided at all.

In the third embodiment, the SMPTE 2022 FEC decoder needs to be modified in order to detect the information on the NIL packets.

The information that indicates the number of NIL packets generated at the encoding process has a higher priority than the data packets.

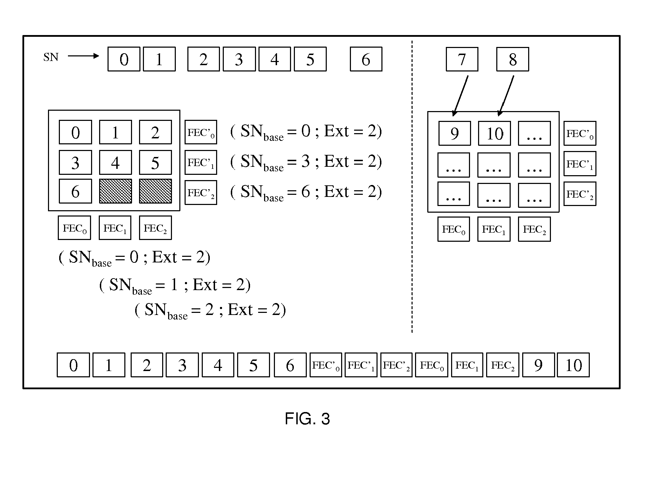

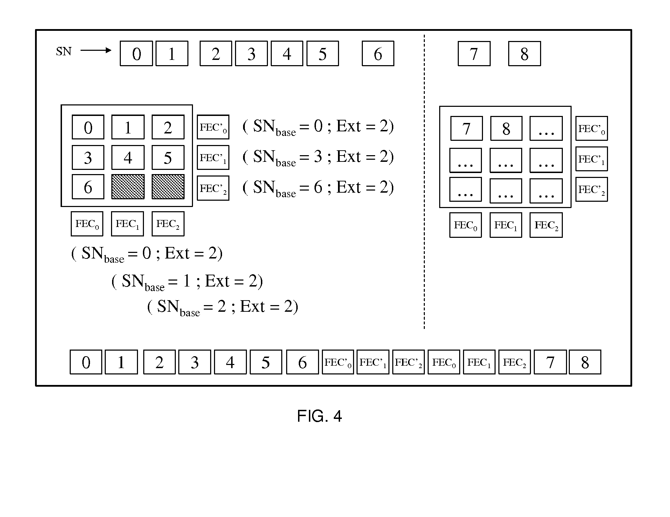

Regarding the RTP sequence number, two scenarios are possible. They are illustrated in Figure 3 and Figure 4. They indicate what happens on a 3x3 FEC matrix when only seven packets are received at the encoder before the maximum latency is reached. Figure 3 uses a new RTP sequence while Figure 4 does not. In figure 3, a RTP sequence number is incremented for each NIL packet in the matrix.

In a first scenario, the encoder does not send the NIL packets, but it increments the RTP sequence number, taking the NIL packets into account. There is a gap in the RTP sequence between the last packet of the current matrix and the first packet of the next matrix when NIL packets were generated. This is represented in the figure 3. The encoder sends the data packet with the RTP sequence numbers from 0 to 6. Then it sends the FEC packets. Later on it sends the data packet of the next matrix, starting the sequence number at 9. The sequence numbers 7 and 8 correspond to the N I L packets.

In a second scenario, the encoder does not send the NIL packets, and does not increment the RTP sequence number taking the NIL packets into account. The data packet of the next matrix starts at the sequence number 7. This is particularly convenient for cases where the FEC encoder processes on an already formed RTP stream since the data packets don't need to be modified. It is indicated in the figure 4. At reception, the decoder first detects the number of NIL packets of the current matrix. Since this information has higher priority than data packets, it makes sure that a data packet would not be mismatched with a NIL packet.

The advantage of the second scenario is that it does not require modifying data packets if the original stream is an RTP stream. A stream produced by such an encoder would lead to erroneous results if processed by a SMPTE 2022 compliant decoder which is not updated to take into account the Extension Field information indicating the number of NIL packets.

With the first scenario, a SMPTE 2022 compliant decoder can process the stream produced by such an encoder, but with a decreased efficiency since NIL packets are considered as lost packets.

The embodiments come within the scope of a two dimension matrix. Of course the invention is not limited to 2 dimension matrixes and is applicable to one dimension matrix as well. A one dimension matrix comprises only one row or only one column.

In the embodiments, the latency value is transmitted once to the receiver. In an alternative, the encoder might modify the latency value even when the transmission has started, and send the modified value to the receiver. This might be relevant to the decoders, as a lower latency value would permit the decoder to buffer less packet data.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

**Claims**

1. Method, at a receiver (2), for decoding error correction packets, comprising the steps of:

   - receiving data packets and error correction packets;
   - ordering said data packets in a fixed size matrix, and said error correction packets in corresponding row and/or column of said matrix;
   - receiving an indication of the number of NIL packets;
   - filling said field of said matrix not filled with a data packet with a NIL packet; and
   - decoding said error correction packets.

2. Method, according to claim 1, **characterized in that** data packets comprise a sequence number (SN), and the sequence number is incremented for each field of the matrix.

3. Method, according to claim 1 or 2, **characterized in that** said receiver comprises a buffer adapted to store received data packets, said buffer having a maximum buffer size, said method comprising the step of:

   - receiving a maximum error correction latency value and a maximum bit rate value; and
   - determining the maximum buffer size from said values.

4. Method, at an encoder (1), for transmitting error correction packets to a decoder (2), comprising the steps of:

   - ordering data packets received during a filling period in a fixed size matrix,
   - forming an error correction packet per row and/or per column of said filled matrix, whether said matrix is full of data packets or not, and
   - sending said data packets and said error correction packets.

5. Method, according to claim 3, **characterized in that** if said matrix is not full of data packets, filling in the matrix with NIL packets prior to forming said error correction packets.

6. Method according to claim 4, **characterized in that** the NIL packets are transmitted as data packets or the number of NIL packets is indicated to said decoder.

7. Method according to claim 5, **characterized in that** the number of NIL packets is indicated in each of said error correction packet.

8. Method according to any one of the claims 4 to 6, **characterized in that** data packets comprise a sequence number (SN), and the sequence number is incremented for each field of the matrix.

9. Method according to any one of the claims 4 to 6, **characterized in that** data packets comprise a sequence number (SN), and the sequence number is not incremented for the at least one non filled field.

10. Method according to any one of the claims 1 or 4 to 8, **characterized in that** said NIL packet is a data packet with payload fields set to zero.

FIG. 1

FIG. 2

FIG. 3

FIG. 4

**European Patent Office**

## EUROPEAN SEARCH REPORT

Application Number

EP 08 30 0076

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/236210 A1 (TOUZNI AZZEDINE [US] ET AL) 19 October 2006 (2006-10-19)<br>* paragraph [0008] *<br>* paragraphs [0021] - [0023] *<br>* paragraphs [0034] - [0036], [0039] *<br>* figures 1,3,4 *<br>----- | 1-10 | INV.<br>H04L1/00 |
| X | WO 2006/053947 A (NOKIA CORP [FI]; HANNUKSELA MISKA [FI]) 26 May 2006 (2006-05-26)<br>* page 2, line 9 - line 16 *<br>* page 10, line 8 - line 12 *<br>* page 13, line 6 - page 14, line 13 *<br>* page 16, line 12 - line 32 *<br>----- | 1-10 | |
| X | US 2003/207696 A1 (WILLENEGGER SERGE [CH] ET AL) 6 November 2003 (2003-11-06)<br>* paragraphs [0009], [0157] *<br>* paragraphs [0171], [0176], [0186], [0191] *<br>* figures 4A-4F *<br>----- | 1-10 | |
| X | US 2006/279437 A1 (LUBY MICHAEL G [US] ET AL) 14 December 2006 (2006-12-14)<br>* paragraphs [0046], [0066] *<br>* figures 2,3 *<br>----- | 1-10 | TECHNICAL FIELDS SEARCHED (IPC)<br><br>H04L |
| X | US 2007/064707 A1 (PANDEL JURGEN [DE] ET AL) 22 March 2007 (2007-03-22)<br>* paragraphs [0034], [0035] *<br>* figure 2 *<br>----- | 1-10 | |
| | -/-- | | |

The present search report has been drawn up for all claims

| Place of search | Date of completion of the search | Examiner |
|---|---|---|
| The Hague | 3 September 2008 | Ghigliotti, Luciano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 08 30 0076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Universal Mobile Telecommunications System (UMTS); Transparent end-to-end Packet-switched Streaming Service (PSS); Protocols and codecs (3GPP TS 26.234 version 7.4.0 Release 7); ETSI TS 126 234" ETSI STANDARDS, LIS, SOPHIA ANTIPOLIS CEDEX, FRANCE, vol. 3-SA4, no. V7.4.0, 1 October 2007 (2007-10-01), XP014040084 ISSN: 0000-0001 * Annex G.2 * ----- | 3 | |
| A,D | SMPTE STANDARD 2022-1-2007: "FORWARD ERROR CORRECTION FOR REAL-TIME VIDEO/AUDIO TRANSPORT OVER IP NETWORKS", 24 May 2007 (2007-05-24), pages 1-15, XP008095891 * the whole document * ----- | 1,4 | |

TECHNICAL FIELDS
SEARCHED (IPC)

The present search report has been drawn up for all claims

| Place of search | Date of completion of the search | Examiner |
|---|---|---|
| The Hague | 3 September 2008 | Ghigliotti, Luciano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**
EP 08 30 0076

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2008

| Patent document cited in search report | | Publication date | Patent family member(s) | | Publication date |
|---|---|---|---|---|---|
| US 2006236210 | A1 | 19-10-2006 | NONE | | |
| WO 2006053947 | A | 26-05-2006 | EP | 1813115 A1 | 01-08-2007 |
| | | | US | 2008065965 A1 | 13-03-2008 |
| | | | US | 2006107187 A1 | 18-05-2006 |
| US 2003207696 | A1 | 06-11-2003 | AU | 2003234491 A1 | 11-11-2003 |
| | | | BR | PI0311851 A | 31-10-2006 |
| | | | CN | 1666454 A | 07-09-2005 |
| | | | CN | 101039133 A | 19-09-2007 |
| | | | CN | 101039460 A | 19-09-2007 |
| | | | EP | 1502176 A2 | 02-02-2005 |
| | | | JP | 2005525032 T | 18-08-2005 |
| | | | WO | 03096149 A2 | 20-11-2003 |
| | | | US | 2006189272 A1 | 24-08-2006 |
| | | | US | 2005075124 A1 | 07-04-2005 |
| US 2006279437 | A1 | 14-12-2006 | NONE | | |
| US 2007064707 | A1 | 22-03-2007 | CN | 1883148 A | 20-12-2006 |
| | | | DE | 10353974 A1 | 30-06-2005 |
| | | | EP | 1685673 A1 | 02-08-2006 |
| | | | WO | 2005050901 A1 | 02-06-2005 |

EPO FORM P0459

For more details about this annex : see Official Journal of the European Patent Office, No. 12/82